# EUROPÄISCHE PATENTSCHRIFT

(11) **EP 0 764 462 B1**
(45) Veröffentlichungstag und Bekanntmachung des Hinweises auf die Patenterteilung: **01.03.2000**
(21) Anmeldenummer: 96113373.3
(22) Anmeldetag: 21.08.1996
(51) Int. Cl.: B01J 19/30

(54) **Füllkörper, insbesondere für Stoff- und/oder Wärmeaustauschkolonnen oder/ -türme**
Random packing, in particular for mass and/or heat exchange columns or towers
Elément de garnissage, en particulier pour colonnes ou tours d'échange de matière et/ou de chaleur

(30) Priorität: 24.08.1995 DE 19531151; 10.10.1995 DE 29516027 U
(43) Veröffentlichungstag der Anmeldung: 26.03.1997
(73) Patentinhaber: Raschig GmbH, 67061 Ludwigshafen (DE)
(72) Erfinder: Schultes, Michael, Dr.-Ing., 67061 Ludwigshafen/Rhein (DE)
(74) Vertreter: Leitner, Waldemar, Dr. techn.

(56) Entgegenhaltungen:
- DE-B- 1 129 931
- US-A- 3 311 356
- US-A- 4 041 113
- US-A- 5 112 536
- US-A- 5 411 681

## Beschreibung

Die Erfindung betrifft einen Füllkörper, insbesondere für Stoff- und/oder Wärmeaustauschkolonnen, die von einer Gas- und/oder Flüssigkeitsströmung durchsetzt werden, wobei der Füllkörper eine Mehrzahl von Austauschflächen aufweist und die Austauschflächen des Füllkörpers im wesentlichen durch die Oberflächen von halbwellen- oder wellenförmigen Streifen ausgebildet sind, wobei der Füllkörper mindestens eine erste Streifen-Gruppe, die mindestens einen halbwellen- oder wellenförmigen Streifen mit einer ersten Periodenlänge I₁ enthält, aufweist.

Derartige Füllkörper sind z. B. aus der DE-A-1 129 931 bekannt und werden als Kolonnenfüllungen im Bereich der Faktioniertechnik eingesetzt, um eine möglichst große Berührungsfläche zwischen dem die Kolonne durchsetzenden Flüssigkeitsstrom und dem hierzu im Gegenstrom geführten Gasstrom zu schaffen. Hierzu ist es erforderlich, daß die in die Stoff- und/oder Wärmeaustauschkolonne geschütteten Füllkörper möglichst große Austauschflächen für diese beiden die Kolonne durchsetzenden Strömungen besitzen, durch welche die beiden Strömungen unter möglichst intensiver gegenseitiger Berührung ausgebreitet und über den Kolonnenquerschnitt gleichmäßig verteilt werden. Große Austauschflächen pro Volumeneinheit des Füllkörpers resultieren aber im allgemeinen in einem großen Strömungswiderstand in der Kolonne, der mit einem nachteiligen Druckabfall der Gasströmung korreliert ist. Die in die Kolonnen geschütteten Füllkörper bilden desweiteren eine regellose Anordnung ohne definierte Orientierung des einzelnen Füllkörpers aus. Dies bringt mit sich, daß die Füllkörper keine exakt definierten Auftreffpunkte für die ihnen zugeführten Flüssigkeitstropfen des die Kolonne durchsetzenden Flüssigkeitsstroms aufweisen. Dies bedeutet aber, daß in einer Vielzahl der Anwendungsfälle nicht die gesamte zur Verfügung stehende Austauschfläche eines Füllkörpers genutzt wird, oder daß spezielle Leitelemente zur Verteilung der Flüssigkeit über die Austauschflächen des Füllkörpers eingesetzt werden müssen. Die zur Erzielung einer gleichmäßigen Verteilung dieser Flüssigkeitstropfen über den Füllkörper erforderlichen Leitelemente erhöhen bei den bekannten Füllkörpern aber in nachteiliger Art und Weise den in der Kolonne auftretenden Druckverlust.

Aus der US-PS 4,041,113 ist ein Füllkörper bekannt, der aus zwei gegeneinander gebogenen Streifen der gleichen Periodenlänge besteht, die an ihren beiden Enden miteinander verbunden sind. Jeder dieser beiden Streifen weist einen in seinem mittleren Bereich befindlichen ausgestanzten Teil auf, dessen Materialbereich aus dem Streifen ins Innere des Füllkörpers gebogen ist.

Es ist daher Aufgabe der Erfindung, einen schüttfähigen Füllkörper der eingangs genannten Art derart weiterzubilden, daß der erfindungsgemäße Füllkörper sich durch eine große spezifische Oberfläche auszeichnet sowie nur zu einem geringen Druckverlust in der Kolonne führt, wobei eine optimale Verteilung der Gas- und/oder Flüssigkeitsströmung erzielt werden soll.

Diese Aufgabe wird erfindungsgemäß dadurch gelöst, daß der Füllkörper mindestens eine sich unmittelbar daran anschließende zweite Streifen-Gruppe, die mindestens einen halbwellen- oder wellenförmigen Streifen mit einer zweiten Periodenlänge I₂ enthält, aufweist, daß die Periodenlänge I₁ der Streifen der ersten Streifen-Gruppe und die Periodenlänge I₂ der Streifen der zweiten Streifen-Gruppe unterschiedlich sind, daß sich die wellen- oder halbwellenförmigen Streifen entlang einer gedachten Axialebene des Füllkörpers erstrecken, und daß die Periodenlänge I₁ eines an die zweite Streifen-Gruppe angrenzenden Streifens der ersten Streifen-Gruppe und die Periodenlänge I₂ eines an diese angrenzenden Streifens der zweiten Streifen-Gruppe derart aufeinander abgestimmt sind, daß die beiden aneinander angrenzenden Streifen sich an mindestens einer Stelle derart berühren, so daß ein Flüssigkeitsübergang zwischen diesen beiden Streifen erfolgbar ist.

Durch die erfindungsgemäßen Maßnahmen wird in besonders vorteilhafter Art und Weise ein schüttfähiger Füllkörper geschaffen, der sich dadurch auszeichnet, daß eine in hohem Maße gleichmäßige Verteilung der Flüssigkeit über die einzelnen Streifen, also über die Austauschflächen des Füllkörpers, gegeben ist: Zum einen bewirkt die halbwellen- oder wellenförmige Struktur der im wesentlichen den Füllkörper ausbildenden Streifen, daß die Flüssigkeit sich leicht über diese Streifen verteilen können. Die erfindungsgemäß vorgesehene Abstimmung der Periodenlänge der einzelnen Streifen bewirkt desweiteren in vorteilhafter Art und Weise, daß sich benachbarte Streifen an mindestens einer Stelle kreuzen, so daß hierdurch ein Übertritt von Flüssigkeit von einem zum benachbarten Streifen möglich ist. Die bereits vorstehend angesprochene halbwellen- oder wellenförmige Ausbildung der einzelnen Streifen des erfindungsgemäßen Füllkörpers besitzt desweiteren den Vorteil, daß hierdurch eine besonders offene Struktur des Füllkörpers ausgebildet wird, die in einem geringen Druckabfall in der Kolonne resultiert.

Eine vorteilhafte Weiterbildung der Erfindung sieht vor, daß mindestens eine der Streifen-Gruppen des erfindungsgemäßen Füllkörpers mindestens zwei Streifen aufweist, und daß sich die Streifen dieser Streifen-Gruppe mindestens an einer Stelle berühren. Die erfindungsgemäße Maßnahme besitzt den Vorteil, daß hierdurch in besonders einfacher Art und Weise eine Verteilung der den erfindungsgemäßen Füllkörper beaufschlagenden Flüssigkeit über die dieser Streifen-Gruppe zugehörigen Streifen erfolgen kann.

Eine weitere vorteilhafte Weiterbildung der Erfindung sieht vor, daß im wesentlichen alle wellenförmigen Streifen einer Streifen-Gruppe im wesentlichen die gleiche Periodenlänge aufweisen, und daß vorzugsweise benachbarte Streifen gegenphasig angeordnet sind. Durch diese erfindungsgemäße Maßnahme wird eine besonders offene Struktur des erfindungsgemäßen Füllkörpers erzielt, so daß sich dieser Füllkörper durch seinen besonders geringen Strömungswiderstand auszeichnet.

Eine weitere vorteilhafte Weiterbildung der Erfindung sieht vor, daß die Periodenlänge mindestens eines der Streifen der zweiten Streifen-Gruppe kleiner als die Periodenlänge der Streifen der ersten Streifen-Gruppe ist. Eine derartige Maßnahme besitzt den Vorteil, daß in vorteilhafter Art und Weise zwischen den Randstreifen der ersten und der zweiten Gruppe mehrere Berührungsstellen ausgebildet werden.

Eine weitere vorteilhafte Weiterbildung der Erfindung sieht vor, daß die Periodenlänge I₁ der Streifen der ersten Streifen-Gruppe ein geradzahliges Vielfaches der Periodenlänge I₂ der Streifen der zweiten Streifen-Gruppe ist. Durch diese Maßnahme wird vorteilhafterweise erreicht, daß im Mittelbereich des erfindungsgemäßen Füllkörpers eine sich quer über den gesamten Füllkörper erstreckende, durchgehende Verbindung der einzelnen Streifen des Füllkörpers ausgebildet wird, so daß eine besonders gute Verteilung der Flüssigkeit über sämtliche Streifen des erfindungsgemäßen Füllkörpers gewährleistet ist.

Weitere vorteilhafte Weiterbildungen der Erfindung sind Gegenstand der Unteransprüche.

Weitere Einzelheiten der Erfindung sind dem Ausführungsbeispiel zu entnehmen, das im folgenden anhand der Figuren beschrieben wird. Es zeigen:
- Figur 1: eine perspektivische Darstellung eines Ausführungsbeispiels eines Füllkörpers,
- Figur 2: eine Ansicht des Ausführungsbeispiels der Figur 1 aus deren Richtung II,
und
- Figur 3: eine Ansicht des Ausführungsbeispiels aus der Richtung III der Figur 1.

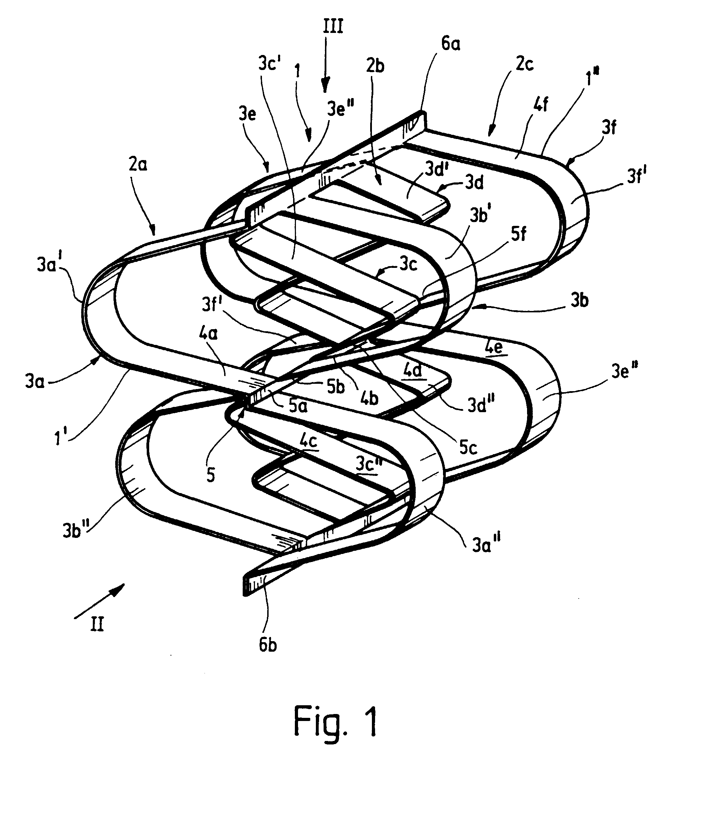

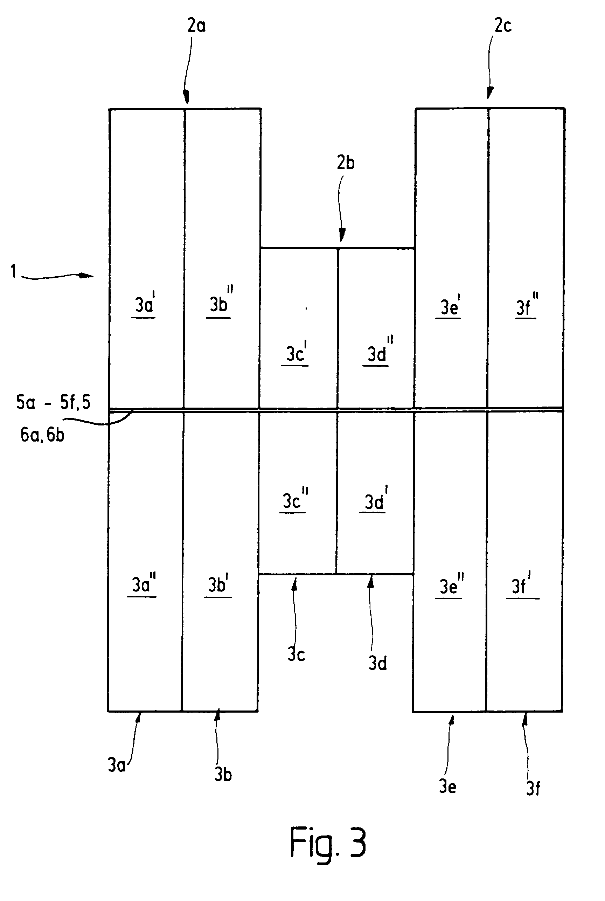

Das in den Figuren 1 bis 3 dargestellte Ausführungsbeispiel eines allgemein mit 1 bezeichneten Füllkörpers weist drei Gruppen 2a, 2b und 2c von wellenförmigen Streifen 3a und 3b, 3c und 3d sowie 3e und 3f auf, deren Oberflächen Austauschflächen 4a-4f des Füllkörpers 1 ausbilden. Die Streifen 3a, 3b bzw. 3a, 3d bzw. 3e und 3f der ersten bzw. der zweiten, bzw. der dritten Gruppe 2a bzw. 2b bzw. 2c weisen eine Periodenlänge I₁ bzw. I₂ bzw. I₃ auf.

Im hier gezeigten Ausführungsbeispiel weist der Füllkörper 1 drei Streifen-Gruppen 2a, 2b und 2c auf. Diese dreigruppige Ausführung des Füllkörpers 1 ist nicht die einzige denkbare. Vielmehr ist es möglich - in der Abhängigkeit von dem gewünschten Einsatzzweck - weniger oder mehr als drei derartige Streifen-Gruppen mit jeweils mindestens einem Streifen 3a-3f, der auch halbwellenförmig ausgebildet sein kann, vorzusehen. Im Minimalfall besteht der Füllkörper 1 aus nur zwei Streifen-Gruppen, die jeweils nur einen einzigen Streifen aufweisen.

In dem hier gezeigten Beispiel ist die Periodenlänge I₁ der beiden Streifen 3a, 3b der ersten Gruppe 2a gleich der Periodenlänge I₃ der Streifen 3e, 3f der dritten Gruppe 2c, während die beiden wellenförmigen Streifen 3c, 3d der zweiten Gruppe 2b eine Periodenlänge I₂ aufweisen, die im hier beschriebenen Fall die Hälfte der Periodenlänge I₁ der Streifen 3a, 3b, 3e, 3f der ersten und der dritten Gruppe 2a, 2c beträgt. In Verallgemeinerung dieses Ausführungsbeispiels ist anzuführen, daß die zweite Periodenlänge I₂ der an die erste Gruppe 2a anschließenden Streifen 3c, 3d der zweiten Gruppe 2b mit deren Periodenlänge I₁ bevorzugt wie I₂ = I₁/n, mit n = 1,2..., etc. in Beziehung steht, d.h., daß die Periodenlänge I₁ ein Vielfaches, insbesondere ein geradzahliges Vielfaches, der Periodenlänge I₂ beträgt oder mit dieser Periodenlänge I₂ im wesentlichen gleich ist.

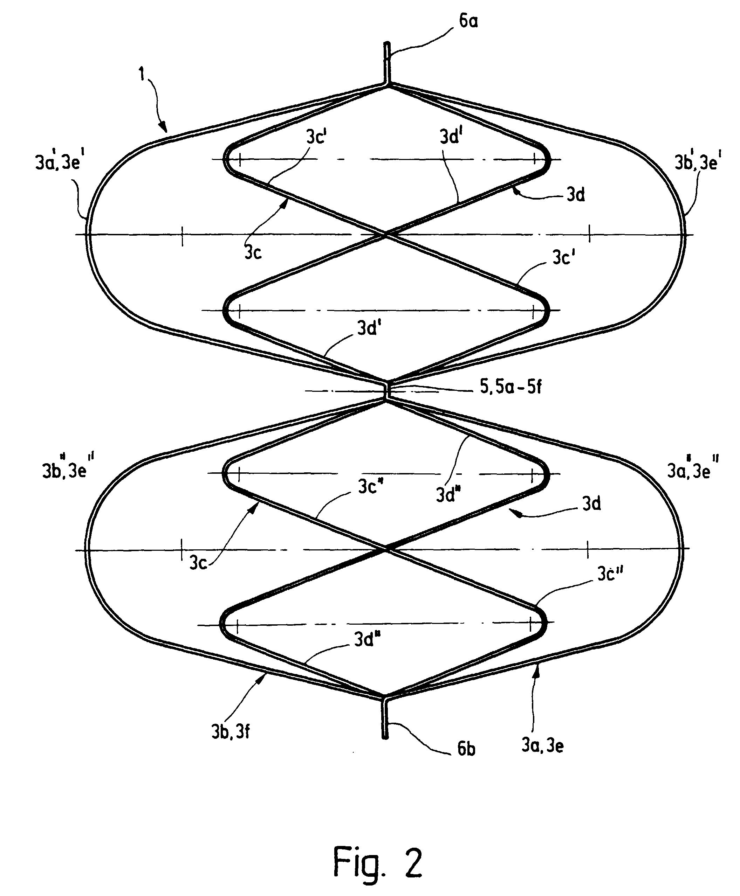

Durch dieses bevorzugte Verhältnis der Periodenlängen I₁ und I₂ wird in vorteilhafter Art und Weise erreicht, daß sämtliche Streifen 3a-3f des Füllkörpers 1 in dessen Mittelbereich 1a ein Amplitudenminimum aufweisen, so daß- wie am besten aus Figur 2 ersichtlich ist - sich sämtliche Streifen 3a-3f in diesem Mittelbereich 1a berühren. Hierdurch wird eine durchgehende Verbindung von der linken Außenseite 1' bis zu rechten Außenseite 1" des Füllkörpers 1 ausgebildet, die es erlaubt, daß sich die auf dem Füllkörper 1 befindliche Flüssigkeit über den gesamten Füllkörper verteilen kann.

Um diesen Effekt noch zu verstärken, kann vorgesehen sein, daß dieser Mittelbereich 1a des Füllkörpers 1 verbreitert ausgebildet ist, indem die Streifen 3a-3f in diesem Bereich je ein Stegelement 5a-5f aufweisen, so daß durch die einzelnen Stegelemente 5a-5f der Streifen 3a-3f ein durchgehender Mittelsteg 5 des Füllkörpers 1 ausgebildet wird.

Die vorstehend beschriebene Ausgestaltung des Füllkörpers 1 mit einem Mittelsteg 5 ist zwar bevorzugt, jedoch aber nicht zwingend erforderlich. Vielmehr ist es zur Erzielung eines Flüssigkeitsübergangs ausreichend, wenn sich benachbarte Stege 3a - 3f paarweise an mindestens einer Stelle derart berühren, daß ein Flüssigkeitsübergang zwischen den Streifen 3a-3f erfolgen kann.

Im Hinblick auf die Gasdurchlässigkeit des Füllkörpers 1 ist es von Vorteil, wenn benachbarte Streifen 3a und 3b, 3b und 3c, etc. gegenphasig angeordnet sind. Dies ist am besten aus Figur 1 ersichtlich, welche zeigt, daß bei den beschriebenen Ausführungsbeispiel die obere Halbwelle 3a' des ersten wellenförmigen Streifens 3a alternierend zur oberen Halbwelle 3b' des zweiten wellenförmigen Streifens 3b angeordnet ist. In entsprechender Art und Weise ist die untere Halbwelle 3a" des ersten wellenförmigen Streifens 3a in ihrer räumlichen Orientierung alternierend zur unteren Halbwelle 3b" des zweiten Streifens 3b der beiden zur ersten Streifen-Gruppe 2a gehörenden Streifen 3a, 3b angeordnet. Es ist natürlich auch denkbar, daß diese gegenphasige Anordnung nur für die gegenüberliegende Halbwellen 3a', 3b' bzw. 3a", 3b" zweier benachbarten Streifen 3a, 3b vorgesehen ist, oder daß nur eine obere und eine untere Halbwelle 3a' und 3b" oder eine untere und eine obere Halbwelle 3a" und 3b' räumlich alternierend angeordnet sind. Dem Fachmann ist ersichtlich, daß in Abstimmung auf den jeweils ins Auge gefaßten Einsatzzweck des Füllkörpers 1 eine Vielzahl von Anordnungsmöglichkeiten der beiden Halbwellen 3a', 3a" und 3b', 3b" der wellenförmigen Streifen 3a, 3b möglich ist.

Die relative räumliche Anordnung der Halbwellen 3c', 3c" und 3d', 3d" der beiden wellenförmigen Streifen 3c, 3d der zweiten Streifengruppe 2b sowie der Halbwellen 3e', 3e" und 3f', 3f'' der beiden Streifen 3e, 3f der dritten Streifen-Gruppe 2c des Füllkörpers 1 wird vorzugsweise wie diejenige der Streifen 3a, 3b der ersten Streifen-Gruppe 2a ausgeführt. Hier wird jedoch bevorzugt, daß die Orientierung der an die jeweils vorangehende Streifen-Gruppe 2a bzw. 2b angrenzenden Streifen 3c bzw. 3e derart gewählt ist, daß sie alternierend orientiert, also gegenphasig, zu derjenigen der entsprechenden Streifen 3b bzw. 3d der vorangehenden Streifen-Gruppe 2a bzw. 2b ist.

Um dem schüttfähigen Füllkörper 1 eine hinreichende mechanische Stabilität zu gewährleisten und um einen besseren Übertritt der Flüssigkeit zwischen zwei benachbarten Streifen zu ermöglichen, ist vorzugsweise vorgesehen, daß die einzelnen Streifen 3a-3f an ihren Berührungsstellen mechanisch verbunden sind. Es muß aber betont werden, daß diese mechanische Verbindung für einen Flüssigkeitsübertritt zwischen zwei benachbarten Streifen 3a-3f nicht zwingend erforderlich ist, da es auch durchaus möglich ist, zwei benachbarte Streifen 3a - 3f derartig beabstandet anzuordnen, daß ein Flüssigkeitsübertritt durch einen Kapillareffekt bewirkt wird.

Die einzelnen Streifen 3a-3f sind - wie am besten aus Figur 2 ersichtlich ist - im wesentlichen sinusförmig ausgebildet. Dies hat den Vorteil, daß sich auf den Streifen 3a-3f befindlichen Flüssigkeitstropfen entlang dieser bewegen können, ohne sofort abzutropfen. Es ist aber auch möglich, anstelle der sinusförmigen Gestaltung der wellenförmigen Streifen 3a-3f auch andere Formen, wie z.B. eine Dreiecksform, eine Sägezahnform oder eine Stufenform der Halbwellen 3a'-3f', 3a''-3f'' vorzusehen.

Der beschriebene Füllkörper 1 besitzt darüberhinaus den Vorteil, daß er besonders einfach aus einem Metallblech herstellbar ist, indem in einem ersten Arbeitsschritt in den Metallstreifen Schnitte eingebracht werden, welche die einzelnen Streifen 3a-3f voneinander abtrennen, wobei die einzelnen Streifen 3a-3f des Füllkörpers 1 durch Außenstege 6a, 6b zusammengehalten werden. In einem zweiten Arbeitsschritt wird dann durch eine einfache Verformung der nun getrennten Metallstreifen des Metallblechs die Wellenstruktur der Streifen 3a-3f hergestellt und die Streifen 3a-3f werden gegebenenfalls an ihren Berührungsstellen mechanisch verbunden.

Um die mechanische Stabilität des geschilderten Füllkörpers 1 noch mehr zu erhöhen, kann noch vorgesehen sein, daß in mindestens einem der Streifen 3a-3f jeweils mindestens eine Sicke ( nicht gezeigt) vorgesehen ist.

Es ist aber auch möglich, den Füllkörper 1 nicht aus Metall, sondern aus Keramik oder Kunststoff herzustellen, wobei im letztgenannten Fall die Herstellung in vorteilhafter Art und Weise durch ein Spritzgießen erfolgen kann.

Abschließend zum Füllkörper 1 sei noch anzuführen, daß dieser vorzugsweise flacher als quadratisch breit ausgeführt ist, da der Füllkörper 1 beim Schüttvorgang dann bevorzugt auf seine flache Seite, das heißt, die Seite mit den großen Öffnungen zwischen den wellenförmigen Streifen 3a-3f fällt. Hierdurch wird der durch den Füllkörper 1 in der damit gefüllten Kolonne hervorgerufene Druckabfall für das diese Kolonne durchströmende Gas minimiert.

Außerdem soll noch erörtert werden, daß unter der Vielzahl der möglichen Ausbildungen des Füllkörpers 1 die in den Figuren dargestellte, bei denen mittlere Streifen-Gruppe mit einer kleineren Periodenlänge I₂ seitlich von je einer Streifen-Gruppe 2a, 2c, die eine größere Periodenlänge I₁, I₃ aufweisen, begrenzt wird, bevorzugt wird, da hierdurch ein besonders geringer Verlustwiderstand für die die Kolonne durchströmende Gasströmung erzielt wird. Die Verallgemeinerung dieses Konstruktionsprinzips besteht dann darin, daß zwischen zwei periphären Streifen-Gruppen 2a, 2c mit einer Periodenlänge I₁, I₃ eine oder mehrere weitere Streifen-Gruppen 2b mit einer kleineren Periodenlänge angeordnet sind.

Es ist aber auch möglich, anstelle der Veränderung der Periodenlänge I_{1,} I₂,I₃ der Streifen 3a-3f deren Form oder deren Amplitude zu verändern, und zwar insbesondere dann, wenn die Periodenlänge zweier aneinandergrenzender Streifen 3a-3c - zum Beispiel also der Streifen 2a und 2b - im wesentlichen gleich ist. Der Flüssigkeitsübergang zwischen zwei benachbarten Streifen wird dann vor allem dadurch erzielt, daß die Form der halbwellen- oder wellenförmigen Streifen 3a-3f oder deren Amplitude entsprechend gewählt wird. Zusammenfassend ist also festzuhalten, daß bei dem beschriebenen Füllkörper 1 die Halbwellen- oder Wellenform der Streifen 3a-3f hinsichtlich ihrer Periodenlänge und/oder ihre Gestalt hinsichtlich Form und Amplitude derart angepaßt werden, daß eine optimale Verteilung der Gas- und/oder Flüssigkeitsströmung innerhalb der Kolonne oder des Turms erzielt wird.

## Patentansprüche

1. Füllkörper, insbesondere für Stoff- und/oder Wärmeaustauschkolonnen, die von einer Gas- und/oder Flüssigkeitsströmung durchsetzt werden, wobei der Füllkörper (1) eine Mehrzahl von Austauschflächen (4a-4f) aufweist und die Austauschflächen (4a-4f) des Füllkörpers (1) im wesentlichen durch die Oberflächen von halbwellen- oder wellenförmigen Streifen (3a-3f) ausgebildet sind, wobei der Füllkörper (1) mindestens eine erste Streifen-Gruppe (2a), die mindestens einen halbwellen- oder wellenförmigen Streifen (3a, 3b) mit einer ersten Periodenlänge I₁ enthält, aufweist, dadurch gekennzeichnet, daß der Füllkörper (1) mindestens eine sich unmittelbar daran anschließende zweite Streifen-Gruppe (2b), die mindestens einen halbwellen- oder wellenförmigen Streifen (3c, 3d) mit einer zweiten Periodenlänge I₂ enthält, aufweist, daß die Periodenlänge I₁ der Streifen (3a, 3b) der ersten Streifen-Gruppe (2a) und die Periodenlänge I₂ der Streifen (3c, 3d) der zweiten Streifen-Gruppe (2b) unterschiedlich sind, daß sich die wellen- oder halbwellenförmigen Streifen (3a-3d) entlang einer gedachten Axialebene des Füllkörpers (1) erstrecken, und daß die Periodenlänge I₁ eines an die zweite Streifen-Gruppe (2b) angrenzenden Streifens (3b) der ersten Streifen-Gruppe (2a) und die Periodenlänge I₂ eines an diese (2a) angrenzenden Streifens (3c) der zweiten Streifen-Gruppe (2b) derart aufeinander abgestimmt sind, daß die beiden aneinander angrenzenden Streifen (3b, 3c) sich an mindestens einer Stelle derart berühren, so daß ein Flüssigkeitsübergang zwischen diesen beiden Streifen (3b, 3c) erfolgbar ist.

2. Füllkörper nach Anspruch 1, dadurch gekennzeichnet, daß der Füllkörper (1) mindestens eine dritte Streifen-Gruppe (2c), die mindestens einen halbwellen- oder wellenförmigen Streifen (3e, 3f) mit einer dritten Periodenlänge I₃ enthält, aufweist, daß die Periodenlänge I₃ und/oder die Form eines an die zweite Streifen-Gruppe (2b) angrenzenden Streifens (3e) der dritten Streifen-Gruppe (2c) und die Periodenlänge I₂ und/oder die Form eines an diese (2c) angrenzenden Streifens (3d) der zweiten Streifen-Gruppe (2b) derart aufeinander abgestimmt sind, daß die beiden aneinander angrenzenden Streifen (3d, 3b) sich an mindestens einer Stelle berühren.

3. Füllkörper nach Anspruch 1 oder 2, dadurch gekennzeichnet, daß in mindestens zwei Streifen-Gruppe (2a, 2c) des Füllkörpers (1) alle Streifen (3a, 3b; 3e, 3f) im wesentlichen die gleiche Periodenlänge (I₁ ; I₃) aufweisen.

4. Füllkörper nach einem der Ansprüche 1 bis 3, dadurch gekennzeichnet, daß die Periodenlänge I₁ mindestens eines Streifen (3a, 3b) der ersten Streifen-Gruppe (2a) im wesentlichen gleich der Periodenlänge I₃ eines Streifens (3e, 3f) der dritten Streifen-Gruppe (2c) ist.

5. Füllkörper nach einem der vorangehenden Ansprüche, dadurch gekennzeichnet, daß die Periodenlänge I₂ der zweiten Streifen-Gruppe (2b) kleiner als die Periodenlänge I₁ oder I₃ der ersten (2a) oder dritten Streifen-Gruppe (2c) ist oder gleich dieser ist.

6. Füllkörper nach Anspruch 5, dadurch gekennzeichnet, daß die erste Periodenlänge I₁ der Streifen (3a, 3b) der ersten Streifen-Gruppe (2a) im wesentlichen ein Vielfaches, insbesondere ein geradzahliges Vielfaches, der Periodenlänge I₂ der Streifen (3c, 3d) der zweiten Streifen-Gruppe (2b) ist.

7. Füllkörper nach einem der vorangehenden Ansprüche, dadurch gekennzeichnet, daß zwei benachbarte Streifen (3a-3f) des Füllkörpers (1) an ihrer Berührungsstelle mechanisch verbunden sind.

8. Füllkörper nach Anspruch 7, dadurch gekennzeichnet, daß mindestens zwei benachbarte Streifen (3a-3f) der Streifen-Gruppen (2a-2c) des Füllkörpers (1) je ein Stegelement (5a-5f) aufweisen.

9. Füllkörper nach Anspruch 8, dadurch gekennzeichnet, daß die Stegelemente (5a-5f) der Streifen (3a-3f) einen gemeinsamen Steg (5) ausbilden.

10. Füllkörper nach Anspruch 9, dadurch gekennzeichnet, daß der gemeinsame Steg (5) sich von einer ersten Außenseite (1') zu einer dieser (1') gegenüberliegenden zweiten Außenseite (1") des Füllkörpers (1) erstreckt.

11. Füllkörper nach einem der vorangehenden Ansprüche, dadurch gekennzeichnet, daß der Füllkörper (1) mindestens einen die Streifen (3a-3f) der Streifen-Gruppen (2a, 2c) verbindenden Außensteg (6a, 6b) aufweist.

12. Füllkörper nach einem der vorangehenden Ansprüche, dadurch gekennzeichnet, daß mindestens zwei Streifen (3a, 3b; 3c, 3d; 3e, 3f) mindestens einer Streifen-Gruppe (2a-2c) des Füllkörpers (1) zueinander gegenphasig angeordnet sind.

13. Füllkörper nach einem der vorangehenden Ansprüche, dadurch gekennzeichnet, daß zumindest zwei nebeneinander angeordnete Streifen (3b, 3c; 3d, 3e) zweier benachbarter Streifen-Gruppen (2a, 2b; 2b, 2c) gegenphasig angeordnet sind.

14. Füllkörper nach einem der Ansprüche 11 bis 13, dadurch gekennzeichnet, daß zumindest eine Halbwelle (3a'-3f'; 3a"-3f") eines Streifens (3a-3f) gegenphasig zu einer Halbwelle (3a'-3f'; 3a"-3f") des zu diesem benachbarten Streifens (3a-3f) angeordnet ist.

15. Füllkörper nach einem der Ansprüche 11 bis 14, dadurch gekennzeichnet, daß eine obere bzw. untere Halbwellen (3a'-3f' bzw. 3a"-3f") eines Streifens (3a-3f) gegenphasig zur unteren bzw. oberen Halbwelle (3a"-3f' bzw. 3a'-3f') des angrenzenden Streifens (3a-3f) angeordnet ist.

16. Füllkörper nach einem der vorangehenden Ansprüche, dadurch gekennzeichnet, daß der Füllkörper (1) aus Metall, insbesondere Metallblech, Keramik oder Kunststoff ausgebildet ist.

17. Stoff- und Wärmeaustauschkolonne, gekennzeichnet durch einen Füllkörper (1) nach einem der Ansprüche 1-16.

## Claims

1. A packing element for use in particular, in mass transfer and/or heat transfer columns, through which a gas and/or a liquid are flowing, said packing element (1) comprising a plurality of exchange surfaces (4a-4f) and said exchange surfaces (4a-4f) of the packing element (1) being generally formed by the surfaces of half-wave-shaped or wave-shaped strips (3a-3f), said packing element (1) comprising at least a first group of strips (2a) having at least a half-wave-shaped or a wave-shaped strip (3a, 3b) with a first periodic length l₁, characterized in that the packing element (1) comprises at least one immediately adjoining second group of strips (2b) having at least a half-wave-shaped or a wave-shaped strip (3c, 3d) with a second periodic length l₂, that said periodic length l₁ of the strips (3a, 3b) of the first group of strips (2a) and the periodic length l₂ of the strips (3c, 3d) of the second group of strips (2b) are different, that the wave-shaped or the half-wave-shaped strips (3a-3d) extend along an imagined axial plane of the packing element (1), and that the periodic length l₁ of a strip (3b) of the first group of strips (2a), said strip (3b) adjoining the second group of strips (2b) and the periodic length l₂ of a strip (3c) of the second group of strips (2b), said strip (3c) adjoining the first group of strips (2a) are matched to each other in such a way that the two adjoining strips (3b, 3c) are in contact with each other at at least one point, so that a liquid transfer between these two strips (3b, 3c) can occur.

2. The packing element according to claim 1, characterized in that said packing element (1) comprises at least a third group of strips (2c) having at least a half-wave-shaped or a wave-shaped strip (3e, 3f) having a third periodic length l₃, that said third periodic length l₃ and/or the shape of a third strip (3e) of said third group of strips (2c), said third strip (3e) adjoining said second group of strips (2b) and said periodic length l₂ and/or the shape of a strip (3d) of said second group of strips (2b), said second strip (3d) adjoining said third group of strips (2c) are matched to each other in such a way that the two adjoining strips (3d, 3e) are in contact with each other at at least one point.

3. The packing element according to claims 1 or 2, characterized in that in at least two groups of strips (2a, 2c) of the packing element (1) all the strips (3a, 3b; 3e, 3f) generally have the same periodic length (l₁ ; l₃).

4. The packing element according to one of the claims 1-3, characterized in that said periodic length l₁ of at least one strip (3a, 3b) of said first group of strips (2a) generally is equal to said periodic length l₃ of a strip (3e, 3f) of said third group of strips (2c).

5. The packing element according to one of the afore-mentioned claims, characterized in that the periodic length l₂ of said second group of strips (2b) is smaller than the periodic length l₁ or l₃ of said first (2a) or third group of strips (2c), or is equal to it.

6. The packing element according to claim 5, characterized in that the first periodic length l₁ of said strips (3a, 3b) of said first group of strips (2a) is generally a multiple, in particular an even-numbered multiple, of the periodic length l₂ of the strips (3c, 3d) of the second group of strips (2b).

7. The packing element according to one of the afore-mentioned claims, characterized in that two adjoining strips (3a-3f) of said packing element (1) are mechanically connected at their point of contact.

8. The packing element according to claim 7, characterized in that at least two adjoining strips (3a-3f) of said groups of strips (2a-2c) of said packing element (1) each comprise a crosspiece element (5a-5f).

9. The packing element according to claim 8, characterized in that said crosspiece elements (5a-5f) of said strips (3a-3f) form a common crosspiece (5).

10. The packing element according to claim 9, characterized in that said common crosspiece (5) extends from a first outside (1') to an opposite second outside (1") of said packing element (1).

11. The packing element according to one of the afore-mentioned claims, characterized in that said packing element (1) has at least one outer crosspiece (6a, 6b) connecting said strips (3a-3f) of said groups of strips (2a, 2c).

12. The packing element according to one of the afore-mentioned claims, characterized in that at least two strips (3a, 3b; 3c, 3d; 3e, 3f) of at least one group of strips (2a-2c) of said packing element (1) are arranged in opposite phase to each other.

13. The packing element according to one of the afore-mentioned claims, characterized in that at least two strips (3b, 3c; 3d, 3e) arranged next to each other in two adjoining groups of strips (2a, 2b; 2b, 2c) are arranged in opposite phase.

14. The packing element according to one of the claims 11-13, characterized in that at least one half-wave (3a'-3f'; 3a"-3f") of a strip (3a-3f) is arranged in opposite phase to a half-wave (3a'-3f'; 3a"-3f") of the adjoining strip (3a-3f).

15. The packing element according to one of the claims 11-14, characterized in that an upper or a lower half-wave (3a'-3f' or 3a"-3f") of a strip (3a-3f) is arranged in opposite phase to a lower or an upper half-wave (3a"-3f" or 3a'-3f'') of the adjoining strip (3a-3f).

16. The packing element according to one of the afore-mentioned claims, characterized in that said packing element (1) is made of metal, in particular sheet metal, ceramics, or synthetic plastic material.

17. A mass and heat transfer column characterized by a packing element (1) according to one of the claims 1-16.

## Revendications

1. Elément de garnissage, en particulier pour colonnes d'échange de matière et/ou de chaleur qui sont traversées par un courant de gaz et/ou de liquide, l'élément de garnissage (1) comprenant une pluralité de surfaces d'échange (4a-4f) et les surfaces d'échange (4a-4f) de l'élément de garnissage (1) étant constituées sensiblement par les surfaces de bandes en forme de demi-onde ou d'onde (3a-3f), l'élément de garnissage (1) comprenant au moins un premier groupe de bandes (2a) qui contient au moins une bande en forme de demi-onde ou d'onde (3a-3b) avec une première longueur de période I₁, caractérisé en ce que l'élément de garnissage (1) comprend au moins un deuxième groupe de bandes (2b) qui y est directement rattaché et qui englobe au moins une bande en forme de demi-onde ou d'onde (3c, 3d) avec une deuxième longueur de période I₂, que la longueur de période I₁ des bandes (3a,3b) du premier groupe de bandes (2a) et la longueur de période I₂ des bandes (3c, 3d) du deuxième groupe de bandes (2b) sont différentes, que les bandes en forme d'onde ou de demi-onde (3a-3d) s'étendent le long d'un niveau axial supposé de l'élément de garnissage (1) et que la longueur de période I₁ d'une bande (3b) du premier groupe de bandes (2a) attenant au deuxième groupe de bandes (2b) et la longueur de période I₂ d'une bande (3c) du deuxième groupe de bandes (2b) attenante à celui-ci (2a) sont ajustées de telle manière entre elles que les deux bandes attenantes l'une à l'autre (3b, 3c) se touchent de telle façon à au moins un endroit qu'un passage de liquide entre ces deux bandes (3b,3c) puisse avoir lieu.

2. Elément de garnissage selon la revendication 1 caractérisé en ce que l'élément de garnissage (1) comprend au moins un troisième groupe de bandes (2c) qui englobe au moins une bande en forme de demi-onde ou d'onde (3e, 3f) avec une troisième longueur de période I₃ et que la longueur de période I₃ et/ou la forme d'une bande (3e) du troisième groupe de bandes (2c) attenante au deuxième groupe de bandes (2b) et la longueur de période I₂ et/ou la forme d'une bande (3d) du deuxième groupe de bandes (2b) attenante à celui-ci (2c) sont ajustées de telle manière entre elles que les deux bandes (3d, 3e) attenantes l'une à l'autre se touchent à au moins un endroit.

3. Elément de garnissage selon la revendication 1 ou 2, caractérisé en ce que dans au moins deux groupes de bandes (2a, 2c) de l'élément de garnissage (1), toutes les bandes (3a, 3b; 3e, 3f) ont sensiblement la même longueur de période (I₁; I₃).

4. Elément de garnissage selon l'une des revendications 1 à 3, caractérisé en ce que la longueur de période I₁ d'au moins une bande (3a, 3b) du premier groupe de bandes (2a) est sensiblement égale à la longueur de période I₃ d'une bande (3e, 3f) du troisième groupe de bandes (2c).

5. Elément de garnissage selon l'une des revendications précédentes, caractérisé en ce que la longueur de période I₂ du deuxième groupe de bandes (2b) est plus petite que la longueur de période I₁ ou I₃ du premier (2a) ou du troisième groupe de bandes (2c) ou qu'elle est égale à celle-ci.

6. Elément de garnissage selon la revendication 5, caractérisé en ce que la première longueur de période I₁ des bandes (3a,3b) du premier groupe de bandes (2a) est sensiblement un multiple, en particulier un multiple pair, de la longueur de période I₂ des bandes (3c, 3d) du deuxième groupe de bandes (2b).

7. Elément de garnissage selon l'une des revendications précédentes, caractérisé en ce que deux bandes voisines (3a-3f) de l'élément de garnissage (1) sont reliées mécaniquement entre elles à leur point de contact.

8. Elément de garnissage selon la revendication 7, caractérisé en ce qu'au moins deux bandes voisines (3a-3f) des groupes de bandes (2a-2c) de l'élément de garnissage (1) comprennent respectivement un élément de nervure (5a-5f).

9. Elément de garnissage selon la revendication 8, caractérisé en ce que les éléments de nervure (5a-5f) des bandes (3a-3f) constituent une nervure commune (5).

10. Elément de garnissage selon la revendication 9, caractérisé en ce que la nervure commune (5) s'étend depuis un premier coté extérieur (1') jusqu'à un deuxième coté extérieur (1") de l'élément de garnissage (1) opposé à celui-ci (1').

11. Elément de garnissage selon l'une des revendications précédentes, caractérisé en ce que l'élément de garnissage (1) comprend au moins une nervure extérieure (6a, 6b) reliant les bandes (3a-3f) du groupe de bandes (2a, 2c).

12. Elément de garnissage selon l'une des revendications précédentes, caractérisé en ce qu'au moins deux bandes (3a,3b; 3c,3d; 3e,3f) d'au moins un groupe de bandes (2a-2c) de l'élément de garnissage (1) sont disposées en opposition de phase l'une par rapport à l'autre.

13. Elément de garnissage selon l'une des revendications précédentes, caractérisé en ce qu'au moins deux bandes disposées l'une à coté de l'autre (3b,3c; 3d,3e) de deux groupes de bandes voisins (2a, 2b; 2b, 2c) sont disposées en opposition de phase.

14. Elément de garnissage selon l'une des revendications 11 à 13, caractérisé en ce qu'au moins une demi-onde (3a'-3f'; 3a"-3f") d'une bande (3a-3f) est disposée en opposition de phase avec une demi-onde (3a'-3f'; 3a"-3f") d'une bande voisine de celle-ci (3a-3f).

15. Elément de garnissage selon l'une des revendications 11 à 14, caractérisé en ce qu'une demi-onde supérieure ou une demi-onde inférieure (3a'-3f' ou 3a"-3f") d'une bande (3a-3f) est disposée en opposition de phase avec la demi-onde inférieure ou la demi-onde supérieure (3a"-3f" ou 3a'-3f') de la bande attenante (3a-3f).

16. Elément de garnissage selon l'une des revendications précédentes, caractérisé en ce que l'élément de garnissage (1) est réalisé en métal, en particulier en tôle métallique, en céramique ou en matière synthétique.

17. Colonne d'échange de matière et de chaleur, caractérisée par un élément de garnissage (1) selon l'une des revendications 1-16.
